# EUROPEAN PATENT APPLICATION

(11) **EP 1 465 083 A2**
(43) Date of publication of application: **06.10.2004**
(21) Application number: 04007109.4
(22) Date of filing: 24.03.2004
(51) Int. Cl.: G06F 17/30

(54) **Methods and system of exposing a report as a schematized queryable data source**

(30) Priority: 31.03.2003 US 404747
(71) Applicant: MICROSOFT CORPORATION, Redmond, Washington 98052 (US)
(72) Inventor: Baker, William P., Woodinville Washington 98072 (US); Carlson, Jason, Redmond Washington 98052 (US)
(74) Representative: Grünecker, Kinkeldey, Stockmair & Schwanhäusser Anwaltssozietät

(57) **Abstract**

A system and methods that expose a report as a schematized queryable data source is provided. In an illustrative implementation, an exemplary computing application processes data according to at least one report definition. The exemplary computing application cooperates with at least one data store and/or data source to retrieve data according to information contained in a report definition. Using the report definition, the exemplary computing application operates on the data found in the cooperating data store and/or data source to generate a desired report. As part of report generation processing, the exemplary computing application generates a schema for the report. The schema can subsequently be used by the exemplary computing application or other cooperating computing applications to perform one or more queries on the generated report. Moreover, the exemplary computing application stores the report in a rendering independent persistent data format.

## Description

### FIELD OF THE INVENTION

The present invention relates generally to the field of report generation and management, and, more particularly, to the definition of a report as a schematized queryable data source usable by a variety of cooperating computing applications and computing environments.

### BACKGROUND OF THE INVENTION

The generation and management of reports is ubiquitous with effective knowledge sharing and understanding. A report, generally, is the predefined aggregation of related and/or associated content in on or more categories. The generated reports may be used across an enterprise to help in the analysis of information- information critical to the successful operation of the enterprise. From big corporations to educational and research institutions to home businesses, the generation and management of reports assists in the process to better understand various disjoined data, and, more importantly, in processing available data to improve the enterprise or organization. Simply, the efficient generation, management, and utilization of reports can be tantamount the success of the enterprise or organization.

In the context of computing applications, report generation and management is more easily accomplished. There exists numerous computing applications that, in whole, or in part, are dedicated to the generation and management of reports. In using these exemplary computing applications, participating users are afforded the ability to define the fields of a report (e.g. to control the content that is to populate the report), to define the layout of the report (e.g. formatting and color), and in some instances define the report's access rights. These computing applications may also allow participating users to define a one or more report templates that can be used and re-used to generate desired reports. Using templates, these computing applications provide a global definition of a desired report or reports. The definitions, in turn, may be employed by cooperating computing applications to assist in the processing of report data. Moreover, existing report generation computing applications provide features and operations to help participating users to store and manage generated reports.

Once a report or report template is defined (e.g. by a participating user), the computing application, using such definition, retrieves relevant data from cooperating data stores to populate the fields as defined by the report or report template. In some instances, the data stored in the cooperating data stores is constantly changing as enterprise operations change. In this context, a report acts as a snapshot in time of the values of certain data fields found in these data stores.

Moreover, these computing applications will format the data and layout the data according to the report or report template definitions. Populated and formatted, these reports exist as discrete file types. As discrete file types, generated reports typically are only readable and can be processed by those cooperating computing applications that have the ability to read and process such file types. Another by-product of the reports being stored in discrete file types is an inability to re-use report definitions by cooperating computing applications.

Stated differently, currently, computing applications generate reports having a single rendering extension (e.g..html, .doc, .xls, .xml) definition that is usually native to the computing application that generates the report. As such, cooperating applications, when processing reports, first are required to perform a translation of the foreign rendering extension to a native rendering extension. This translation step, in some instances, can introduce errors, such as, report layout/formatting error and, more importantly, report data error. Moreover, the report, in such form, has limited utility to cooperating applications as the generated report is not easily queryable. In most instances, participating users will use the computing applications to generate new reports having new report definitions instead of trying to reuse an already generated report.

Another drawback of existing practices is an inability to perform a time driven analysis of already generated reports. As described, a computing application may operate on one or more cooperating data stores. These data stores have various tables having various field definitions. Over time, the value of the fields will change to reflect one or more changes in the organization and/or enterprise operating the data store. For example, a car dealership may employ a computing application cooperating with a data store to record sales. The sales values would change as more cars are sold. In the same example, existing computing applications may operate to generate a report to show the total sales by each of the sales staff of the car dealership. Such computing applications operate to gather the necessary data according to a report definition and generate a report according to the report definition. However, the report acts a snapshot of the values of the data fields found in the cooperating data store at the time the report is generated. Moreover, current computing applications expose the generated report as a data construct that is not schematized, not stored in a non-persistent data format, and, thus, not easily queryable. As such, these applications are not be able to support a time-dimensioned query on the historical reports to provide a time-driven analysis of one or more of the report data values. As a result, trend analysis using current report generation computing applications is deemed arduous, if not impossible.

From the foregoing it is appreciated that there exists a need for systems and methods that provide reports as schematized queryable data sources existing in a persistent data format. By having these systems and methods the prior art is overcome.

### SUMMARY OF THE INVENTION

The present invention provides systems and methods that exposes a report as a schematized queryable data source. In an illustrative implementation, a computing application operating in a computing environment is provided to cooperate with one or more data stores and/or data sources to generate reports that are exposed as schematized queryable data sources. The exemplary computing application cooperates with at least one data store having desired data, and a report definition having data field definitions for a desired report. The report definition comprises, *inter alia,* report layout and formatting information, report parameters, and report field definitions.

In operation, the exemplary computing application receives the report definition. Using the various information provided in the report definition, the exemplary application communicates with cooperating data store and/or other data sources to retrieve desired data in accordance with the report definition. Once aggregated, the exemplary computing application associates data extensions and proceeds to generate the report. As part of report generation, the computing application process the data in context of the report definitions to generate a schema for the report. The report schema may then be used subsequently by the computing application to perform queries on the report.

Moreover, in the contemplated implementation, the generated report is provided by the computing application in a rendering independent persistent data format. The rendering independent persistent data format, *inter alia,* allows for cooperating computing applications and computing environments to perform time lapsed and time driven queries on the report exposed as schematized queryable data source, and more importantly, allows the report to be perceived as any other data source by other cooperating computing applications.

Other features and aspects of the herein described systems and methods are described in more detail below.

### BRIEF DESCRIPTION OF THE DRAWINGS

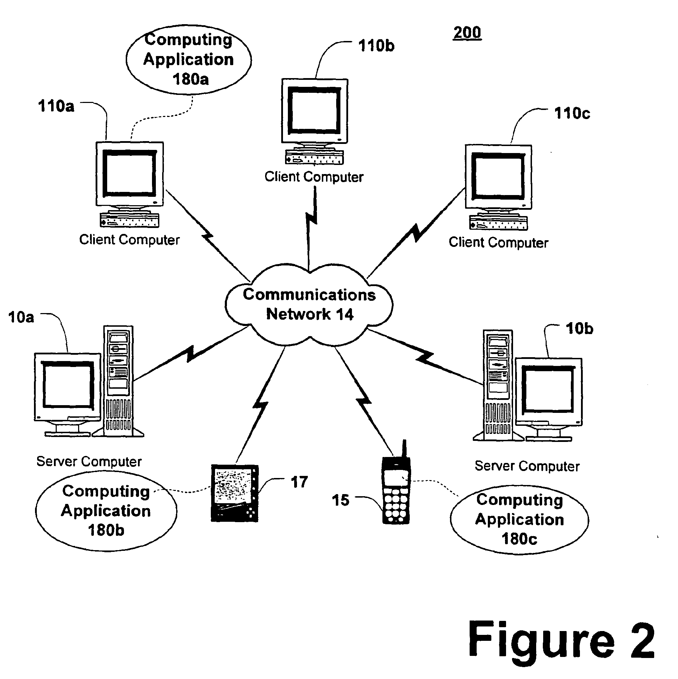

Figures 1 and 2 are schematic illustrations of exemplary computing environments suitable for the present invention, with Figure 2 depicting an exemplary networked computing environment;
Figure 3 is a block diagram of showing an exemplary implementation of a report as a data source in accordance with the herein described system and methods;
Figure 4 is a block diagram depicting the flow of report processing in accordance with the herein described systems and methods;
Figure 5 is a block diagram depicting the flow of report utilization in accordance with the herein described system and methods;
Figure 6 is a detailed block diagram of exemplary components to process schematized queryable reports in accordance with the herein described systems and methods;
Figure 7 is flow diagram of the processing performed to expose a report as a schematized queryable data source in accordance with the herein described systems and methods;
Figure 8A is a flow diagram of the processing performed to expose the data source as a rendering independent persistence of information;
Figure 8B is a flow diagram of the processing performed when translating the rendering independent persistence of information as a report exposed as a schematized queryable data source; and
Figure 9 is a flow diagram of the processing performed when processing the report exposed as a schematized queryable data source to generate a desired snapshot.

### DETAILED DESCRIPTION OF THE ILLUSTRATIVE IMPLEMENTATIONS

### Overview:

Report generation, management, and utilization is common-place among organizations and enterprises as part of normal operating procedures. Reports can be generally considered an aggregation of a set of data that is presentable according to predefined layouts and predefined formats. In some instances, included in report generation are one or more operations that are performed on report data to generate new report data or to better organize existing report data. For example, a car dealership may utilize reports to track sales of cars. The data stored may reflect each sale by sales representative, car type, and date. An exemplary report may show the total sales for that car dealership. Instead of having a separate operation to tally up all of the sales to generate the total sales figure and stored, the report generating mechanism can include the tallying operation as part of report generation.

With the advent of computing technologies, report generation, management and utilization has become significantly easier. Currently there are several computing applications that assist participating users in the generation, management, and utilization of reports. Generally, these computing application cooperate with data stores and/or data sources to retrieve desired data. The data is then formatted according to a predefined layout and format and is presented to the participating users as a report. In some instances, the computing application generating the report will perform one or more intermediate operations on the data to generate new data for the report. The generated reports exist as discrete files that, in most instances, have a single rendering definition. Stated differently, the computing application generating the report will generally produce the report in a data format native to the computing application itself and not for other cooperating computing applications rendering report re-usability between disparate computing applications arduous.

In this context, reports generated by current applications do not avail themselves for simple reusability and/or interoperability. In most cases it is more efficient to execute a new report generation having a change in report definitions than it is to re-use an already generated report. The level of complexity increases as disparate applications try to use non-native reports. For example, a first database computing application having it's own native rendering extension would first have to translate a report generated by a second computing application having a second rendering extension. The translation process may introduce a variety of errors including data errors which, in some instances, can render the report useless.

Moreover, report generationcomputing applications do not employ a rendering independent persistent data format in which the reports can be stored. Rather, current practices store the report in a data format representative of the native rendering extension wherein the report data is not persistent (i.e. changes as the data in the data store changes). In doing so, time driven queries run against generated reports become extremely difficult. Stated differently, current report generating computing applications produce reports that do not persist over time. A report run against a data store will result in reports that reflect the values of the data in the data store at the time of the report generation.

The present invention aims to ameliorate the shortcomings of existing practices by providing a system and methods that expose a report as a schematized queryable data source having a rendering independent persistent data format. Specifically, an exemplary computing application is provided that operates on data according to a report definition. The report definition contains, *inter alia,* information relevant to the desired data to be populated in the report, layout information, and formatting information. The exemplary computing application retrieves the data to populate the desired report according to the report definition from the cooperating data store. Once gathered, the exemplary computing application defines a schema for the report data and stores the report in an intermediate data format. The intermediate data format is a rendering independent persistent data format. As such, the generated report having an associated schema is exposed as a data source with all of the benefits a data source provides to cooperating applications. Moreover, being stored as a rendering independent persistent data format, current reusability issues are resolve, as well as, with the present system and methods, time driven queries are more easily executable against a set of generated reports.

### A. Exemplary Computing Environment

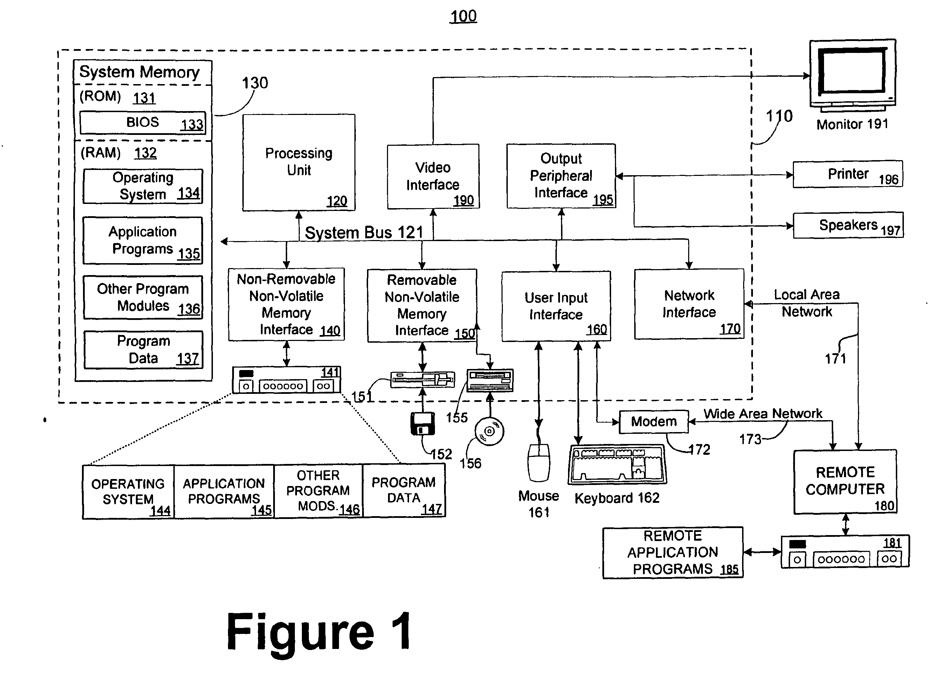

Figure 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices.

With reference to Figure 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and non-volatile media, removable and non-removable media. By way of example, and not limitation, computer readable media may comprise computer storage media and communication media. Computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or non-volatile memory such as ROM 131 and RAM 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/non-volatile computer storage media. By way of example only, Figure 1 illustrates a hard disk drive 140 that reads from or writes to non-removable, non-volatile magnetic media, a magnetic disk drive 151 that reads from or writes to a removable, non-volatile magnetic disk 152, and an optical disk drive 155 that reads from or writes to a removable, non-volatile optical disk 156, such as a CD-ROM or other optical media. Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

### B. Exemplary Networked Computing Environment

Computer 20a, described above, can be deployed as part of a computer network. In general, the above description for computers applies to both server computers and client computers deployed in a network environment. Figure 1A illustrates an exemplary network environment, with a server in communication with client computers via a network, in which the present invention may be employed. As shown in Figure 1A, a number of servers 10a, 10b, etc., are interconnected via a communications network 160 (which may be a LAN, WAN, intranet, the Internet, or other computer network) with a number of client computers 20a, 20b, 20c, or computing devices, such as, mobile phone 15, land-line telephone 16, and personal digital assistant 17. In a network environment in which the communications network 160 is the Internet, for example, the servers 10 can be Web servers with which the clients 20 communicate via any of a number of known protocols, such as, hypertext transfer protocol (HTTP) or wireless application protocol (WAP). Each client computer 20 can be equipped with browser 180a to gain access to the servers 10. Similarly, personal digital assistant 17 can be equipped with browser 180b and mobile phone 15 can be equipped with browser 180c to display and receive various data.

In operation, a user (not shown) may interact with a computing application running on a client computing devices to expose a report as a schematized queryable data source. The reports may be stored on server computers and communicated to cooperating users through client computing devices over communications network 160. A user may generate, manage, and interact with such reports by interfacing with computing applications on client computing devices. These transactions may be communicated by client computing devices to server computers for processing and storage. Server computers may host computing applications to expose reports as queryable schematized data sources.

Thus, the present invention can be utilized in a computer network environment having client computing devices for accessing and interacting with the network and a server computer for interacting with client computers. However, the systems and methods described herein can be implemented with a variety of network-based architectures, and thus should not be limited to the example shown. The herein described systems and methods will now be described in more detail with reference to a presently illustrative implementation.

### C. Reports As Data Sources

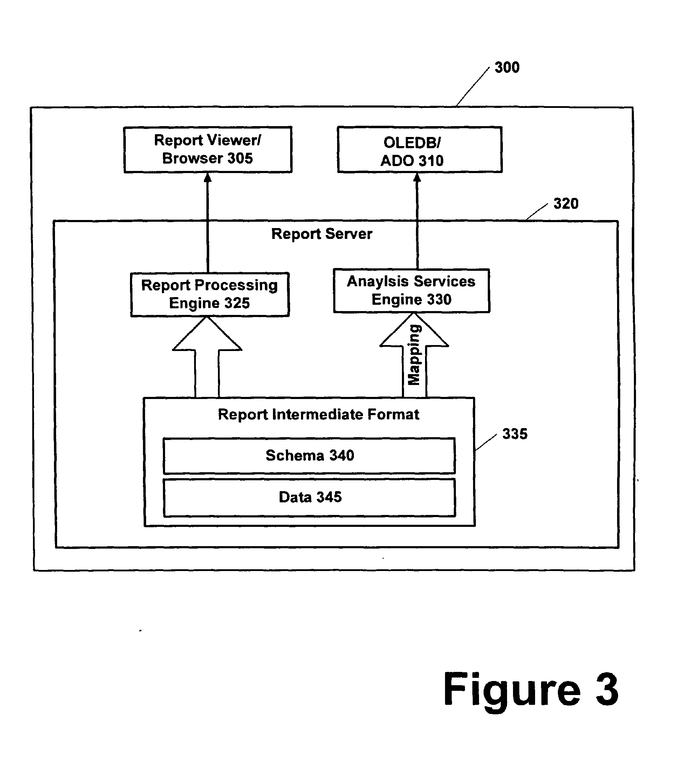

Figure 3 shows a block diagram of an exemplary illustrative architecture of an exemplary report generation and management system that exposes a report. A shown, the exemplary architecture 300 comprises report server 320. Report server 320 further comprises report processing engine 325, analysis services engine 330, and report intermediate format 335. The report intermediate format 335 further comprises data 345 and schema 340. Lastly, exemplary architecture 400 comprises report viewer/browser 305 and OLEDB/ADO 310. In operation, report server 320 generates schema 340 that operates on report data 345. The report server 320 generates report intermediate format which is a schematized queryable data source having a rendering independent persisted data format. The intermediate data format can then be used by report server 320 to display the generated report via 305. In this context, the intermediate format 335 is processed by the report processing engine 325 of the report server 320 to display the report on report viewer/browser 305. The intermediate format can also be used by report server 320 to communicate the generated report to cooperating environments via analysis services engine 330 using OLEDB module 310.

By having the report in an intermediate format that is schematized, the report looks like and acts like a data source to cooperating environments and cooperating computing applications.

### D. Queryable and Schematized Reports

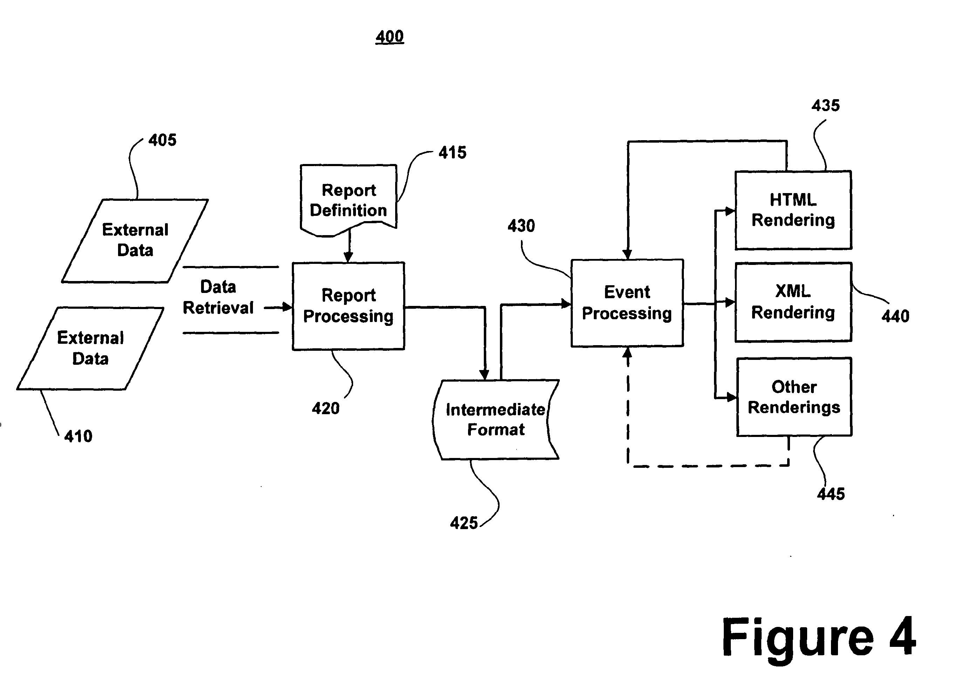

Figure 4 shows the exemplary data flow between exemplary components of a report generation and management system that expose reports as schematized queryable data sources. As shown, report generation and management system 400 comprises various components for use in exposing reports as schematized queryable data sources. Specifically, report generation and management system 400 comprises report processing module 420. As is shown, report processing module 420 cooperates with report definition 415 and accepts data from external data sources 405 and 410 to generate reports that are stored in an intermediate format 425.

In operation, a generated report may be requested by one or more cooperating environments. In this context, the report, stored in an intermediate data format, is communicated to an event processing module 430 which coordinates the communication of generated reports, in whole or in part, to requesting environments. Event processing module 430 determines the rendering of the requesting environment and provides the report in whole or in part to the requesting environment in a rendering extension native to the requesting environment. For example, if HTML rendering is required HTML rendering extensions 435 are employed. Comparatively, if XML rendering is required, XML rendering extension 440 is employed. And so on, such that other rendering types would be represented by other rendering extensions 445.

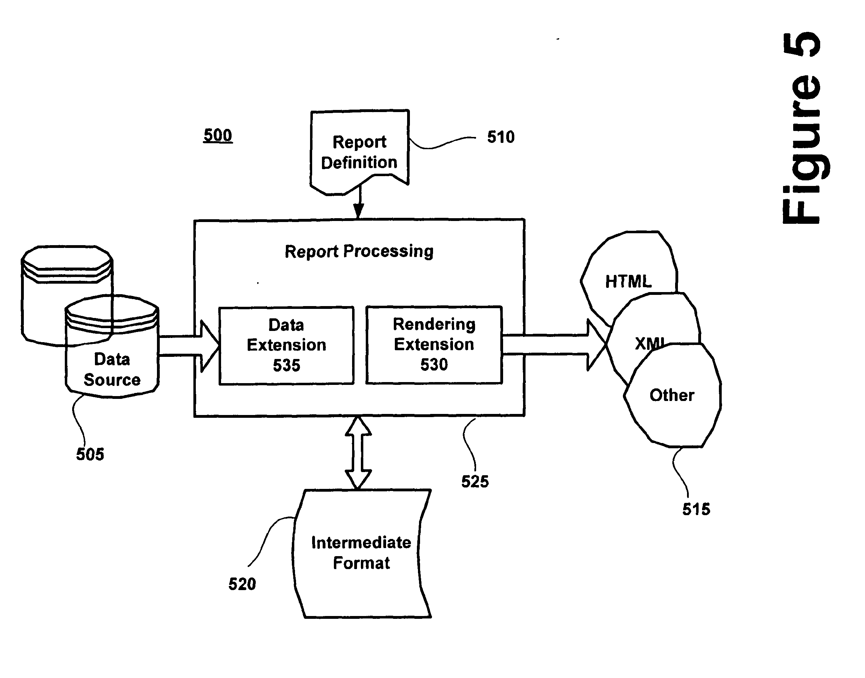

Figure 5 shows an exemplary high level deployment of an exemplary report generation and management system 500. As shown report generation and management system 500 comprises report processing module 525. Report processing module 525 comprises data extensions 525 and rendering extensions 530. Furthermore, report processing module cooperates with report definition 510 and data source 505. In operation, a request for a report is provided to the report processing module 525. The report processing module 525 obtains the proper report definition from report definitions filed 510 for application to data found in data source 505. The data is then processed by report processing module 525 using data extension 535 to identify the data elements from data source 505. Report processing module 525 then processes the data according to the appropriate report definition to generate a report that is exposed as a schematized queryable data source. The report is then stored by the report processing module 525 in an intermediate data format 520 for future use.

In addition to generating reports, report generation and management system 500 is capable of communicating generated reports to cooperating environments in spite of the rendering required by the required by the requesting environments. For example, report generation and management system 500 may be employed to communicate a generated report to a cooperating environment. In this context, the generated report stored in an intermediate format 520 is retrieved by report processing module 525 and processed using rendering extensions 530 to generate a report in a rendering format acceptable by the requesting environment.

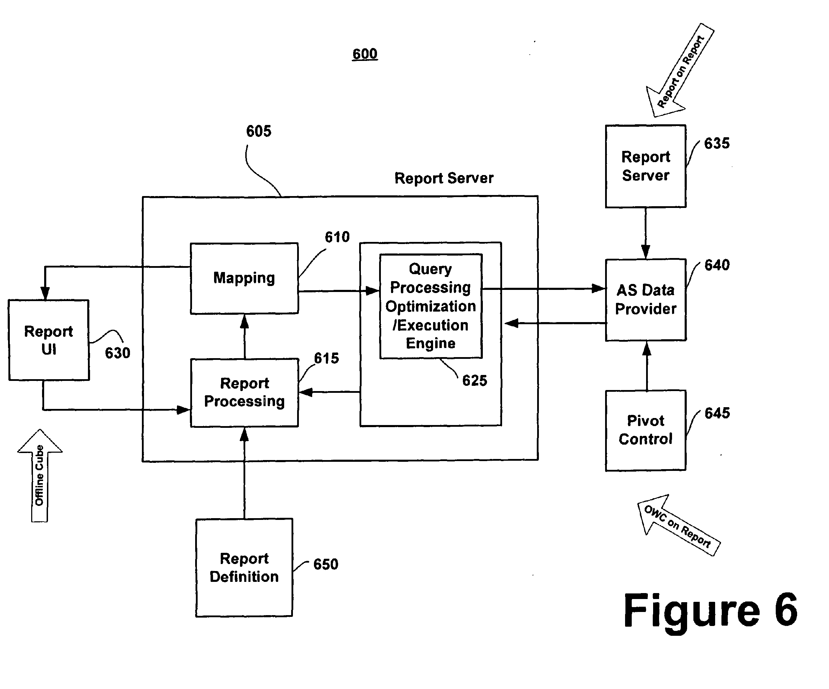

Figure 6 shows a more detailed exemplary deployment of an exemplary report generation and management system capable of exposing a report as a schematized queryable data source having a rendering independent persistent data format. As shown report generation and management system 600 comprises a report server 605. Report server 605 in turn comprises mapping module 610, report processing module 615 and query processing optimization/execution engine 625. Report server 605 cooperates with various cooperating components including but not limited to report user interface (UI) 630, report definitions 650, a second report server 635, Analysis Services (AS) data provider 640, and pivot control component 645.

When generating a report, report server 605 cooperates with report definitions 650 to obtain the appropriate report definition for the desired report. The report definition is then processed by report processing module 615 of report server 605. Report server 605, using the appropriate report definition gathers the appropriate data and generates a schematized queryable data source representative of the desired report. The report can then be displayed on the report UI 630 by report server 605. In this contemplated operation, report processing module 615 of report server 605 cooperates with mapping module 610 to map the desired report for viewing and display on report UI 630.

In operation, report generation and management system 600 may support a number of operations and functions. For example a report be run on a set of already generated reports. As shown in Figure 6, by the arrow, a request for a report-on-a-report is provided to a report server 635. The report server 635 processes the report-on-a-report request and cooperates with AS data provider module to fulfill the request. In turn, AS data provider 640 cooperates with query processing optimization/execution engine 625. This engine cooperates with report processing module 615 to obtain/generate the necessary data to satisfy the report-on-a-report request. Similarly, a request for an OWC on a report is a type of pivot control module 645 which in turn cooperates with AS data provider 640 to fulfill the OWC on the report request.

Another use of report generation and management system 600 is to allow participating users to view reports on report UI 630 originating from remote cooperating environments. In this context, the report UI 630 cooperates with report processing module 615. Report processing module 615 cooperates with mapping module 610. Mapping module 610 operates to translate data from one data format to another. As such, it may be used to translate data in a rendering independent data format to a rendering dependent data format for rendering in requesting environment. The mapping module 610 then cooperates with the query processing optimization/execution engine 625 for communication to one or more cooperating modules.

It is appreciated that report server 605 in the contemplated implementations can comprise any of computing hardware, computing software, and the combination of computing hardware and computing software.

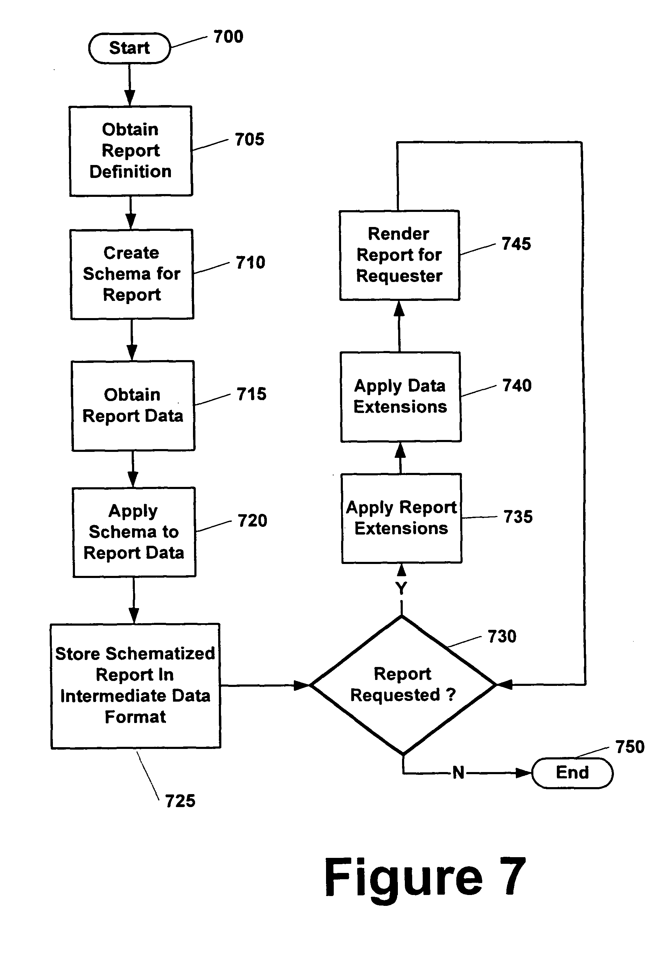

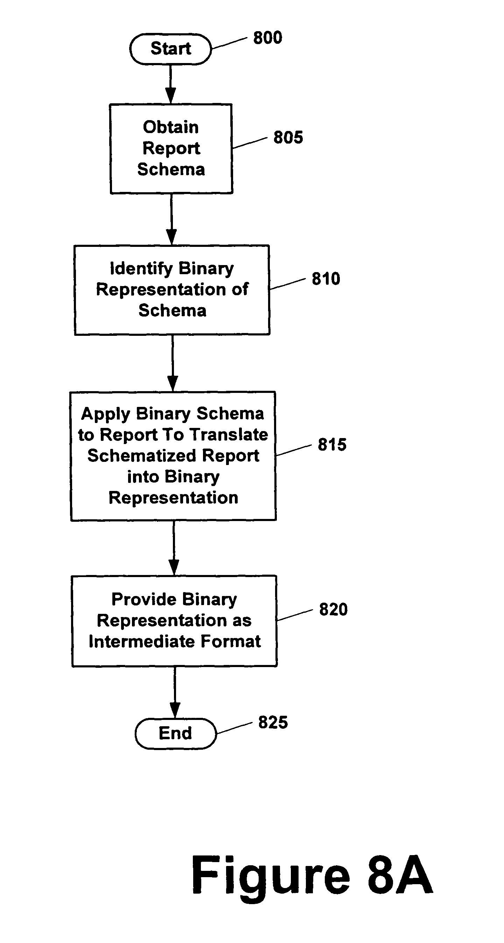

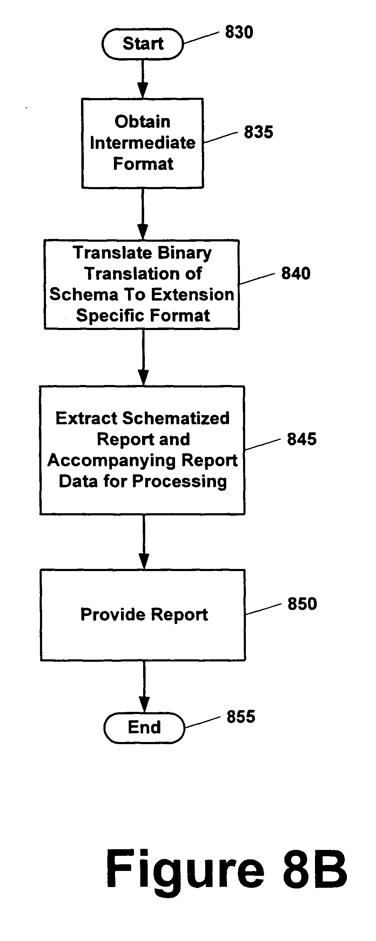

Figure 7 shows a flowchart of exemplary processing performed to expose a report as a schematized queryable data source and the subsequent processing performed in utilizing such exposed report. As is shown, processing begins at block 700 and proceeds to block 705 where the report definition is obtained. At block 710 a schema is created for the report according the obtained report definition. The report data is then obtained at block 715 and the created schema, created at block 710, is applied to the report data at block 720. The schematized report is then stored in an intermediate format at block 725 (according to the processing described in Figures 8A and 8B). From there the processing proceeds to block 730 where a check is performed to determine if a report has been requested (e.g. requested by the native environment or by a cooperating environment). In the context of the examples provided, an environment comprises any of a computing environment and a partial computing environment. If a report has been requested, processing proceeds to block 735 where data extensions are applied to the report and data extensions provided at block 740. In a contemplated illustrative implementation, the data extensions are applied to the data of the report to assist to identify the definition of the data fields. The rendering extensions, as described above, are used to translate the report for use in the rendering format of the environment using the report. The report is then rendered at block 745 for display in the environment requesting the report. Processing then terminates at block 750. If, however, at block 730 a report is not requested, processing proceeds to block 750 and terminates.

### E. Rendering Independent Persistence of Information

Figure 8A shows a flowchart of exemplary processing performed to provide an exposed report in a rendering independent persistent data format. As shown, processing begins at block 800 and proceeds to block 805 where the report schema of the exposed schematized queryable report is obtained. Processing then proceeds to block 810 where the rendering independent persistent data format is identified. In an illustrative implementation, the rendering independent persistent data format comprises a binary data format. In context to block 810, the processing of the herein described methods in accordance with the provided example contemplate the identification of binary representation of the schema. Further to the provided example, processing proceeds to block 815 where the identified binary schema is applied to the desired report to translate the schematized report into a binary data format. Processing then proceeds to block 820 where the generated binary representation is provided as an intermediate data format in which the exposed report may exist. Processing then terminates at block 825.

Figure 8B shows a flowchart of the exemplary processing performed when processing requests by cooperating environments to retrieve an exposed report, in whole or in part, for use in the requesting environment. As shown, processing begins at block 830 and proceeds to block 835 where the desired report (in whole or in part) is requested and is provided in its intermediate format (e.g. rendering independent persistent data format). From there, processing proceeds to block 840 where the intermediate format, a rendering independent format, to a rendering dependent format, namely, the rendering format of the requesting environment. In an illustrative implementation, the translation step contemplates the binary translation of the report schema to the extension specific format of the requesting environment. At block 845, the schematized report and accompanying data are extracted for presentation in the rendering extension of the requesting environment. The final report is then provided at block 850. Processing then terminates at block 850.

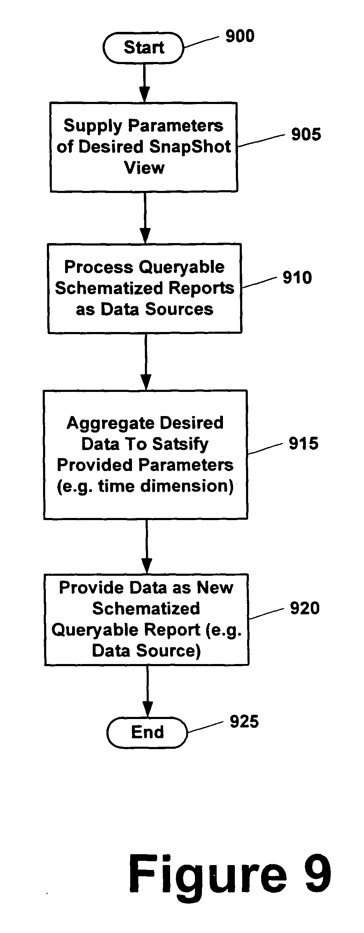

Figure 9 shows a flow chart of exemplary processing performed when performing a time-based query is performed against a set of generated reports. As shown, processing begins at block 900 and proceeds to block 905 where the parameters of the desired snapshot view is provided. From there processing proceeds to block 910 where the schematized queryable reports are processed as data sources. At block 915, the data is then aggregated from the set of generated reports according to the provided parameters (e.g. collect all sales values from year 1 to year 2 in the Midwest geographic region across all sales reports from year 1 to year 2). The aggregated data is then collected and processed at block 920 to provide an new schematized queryable report having the desired snapshot data. Processing the proceeds to block 925 where it terminates.

The processing described in Figure 9A employs one or more features of the herein described systems and methods. Specifically, the herein described systems and methods contemplate a mechanism that exposes a report as a schematized queryable data source having a rendering independent persistent data format. The reports being schematized, queryable, and persistent, a time-based query (e.g. trend snapshot) is easily processed on a set of such reports as data is collected over a time value identified from the report's schema. The values are reliable as the report is stored in a persistent data format.

### F. Conclusion

As mentioned above, while exemplary embodiments of the present invention have been described in connection with various computing devices and network architectures, the underlying concepts may be applied to any computing device or system in which it is desirable to traverse and/or perform other functions in connection with Thus, the processes and systems described above may be applied to a variety of applications and devices. While exemplary data structures, programming languages, names and examples are chosen herein as representative of various choices, these are not intended to be limiting.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the debugging interface aspects of the present invention, e.g., through the use of a data processing API or the like, are preferably implemented in a high level procedural or object-oriented programming language to communicate with a computer system. However, the program(s) can be implemented in assembly or machine language, if desired. In any case, the language may be a compiled or interpreted language, and combined with hardware implementations.

The methods and apparatus of the present invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, or a receiving machine having the debugging capabilities as described in exemplary embodiments above becomes an apparatus for practicing the invention. When implemented on a general-purpose processor, the program code combines with the processor to provide a unique apparatus that operates to invoke the functionality of the present invention. Additionally, any storage techniques used in connection with the present invention may invariably be a combination of hardware and software.

While the present invention has been described in connection with the presently preferred embodiments, it is to be understood that other similar embodiments may be used or modifications and additions may be made to the described embodiment for performing the same function of the present invention without deviating there from. For example, one skilled in the art will recognize that the present invention as described in the present application may apply to any computing device or environment, whether wired or wireless, and may be applied to any number of such computing devices connected via a communications network, and interacting across the network. Furthermore, it should be emphasized that a variety of computer platforms, including handheld device operating systems and other application specific operating systems are contemplated, especially as the number of wireless networked devices continues to proliferate. Still further, the present invention may be implemented in or across a plurality of processing chips or devices, and storage may similarly be effected across a plurality of devices. Therefore, the present invention should not be limited to any single embodiment, but rather should be construed in breadth and scope in accordance with the appended claims.

## Claims

1. In a computing environment, a method to expose a report as a schematized queryable data source comprising the steps of:
providing a visual layout of data; and
deriving a queryable schema from the layout to create a data source.

2. The method as recited in claim 1, further comprising providing a report definition, the report definition comprising information indicative of the visual layout.

3. The method as recited in claim 1, further comprising storing the data source in a rendering independent persistent data format.

4. The method as recited in claim 2, further comprising providing a report processing engine, said report processing engine capable of communicating the report as a data source to cooperating environments.

5. The method as recited in claim 4, further comprising providing a rendering module, the rendering module capable of processing the rendering independent persistent data format for use in rendering specific environments.

6. The method as recited in claim 1, further comprising providing a report user interface for use in displaying and navigating through reports.

7. The method as recited in claim 6, further comprising providing a mapping module, said mapping module operating to map reports to the report user interface.

8. The method as recited in claim 1, further comprising providing an query data module.

9. The method as recited in claim 1, wherein said deriving step further comprises identifying a schema for the report.

10. The method as recited in claim 9, further comprising applying the schema to data.

11. A computer readable medium having computer readable instructions to instruct a computer to perform the method as recited in claim 1.

12. A system to expose a report as a schematized queryable data source comprising:
a report definition; and
a report processing module, said report processing system having a schema that operates on report data according to the report definition to expose it as a schematized queryable data source.

13. The system as recited in claim 12, further comprising a report viewer, the report viewer capable of displaying reports.

14. The system as recited in claim 12, further comprising data extensions.

15. The system as recited in claim 12, further comprising rendering extensions.

16. The system as recited in claim 15, further comprising external data sources.

17. The system as recited in claim 12, wherein the report processing module comprises a report server.

18. The system as recited in claim 17, wherein the report server comprises a computing environment.

19. The system as recited in claim 18, further comprising a rendering module, the rendering module cooperating with the report processing module to render reports according to rendering requirements specific to cooperating environments.

20. The system as recited in claim 12, wherein the data source comprises a rendering independent persistent data format.
